# EUROPÄISCHE PATENTSCHRIFT

(11) **EP 0 981 889 B1**
(45) Veröffentlichungstag und Bekanntmachung des Hinweises auf die Patenterteilung: **16.07.2003**
(21) Anmeldenummer: 98924287.0
(22) Anmeldetag: 07.05.1998
(51) Int. Cl.: H04M 3/36

(54) **BELASTUNGSREGELUNG IN EINER VERMITTLUNGSVORRICHTUNG**
LOAD ADJUSTMENT IN A COMMUNICATION DEVICE
REGULATION DE CHARGE DANS UN DISPOSITIF DE COMMUNICATION

(30) Priorität: 13.05.1997 EP 97107807
(43) Veröffentlichungstag der Anmeldung: 01.03.2000
(73) Patentinhaber: SIEMENS AKTIENGESELLSCHAFT, 80333 München (DE)
(72) Erfinder: GASTHAUS, Elisabeth, D-81476 München (DE); HANSELKA, Peter, D-80335 München (DE)
(86) Internationale Anmeldenummer: EP9802689
(87) Internationale Veröffentlichungsnummer: WO98052338

(56) Entgegenhaltungen:
- EP-A- 0 171 761
- EP-A- 0 171 784
- EP-A- 0 177 735
- EP-A- 0 205 919
- US-A- 5 410 537
- J.A.G. HIGUERA ET AL.: "Progressive method of overload control for processors" NINTH INTERNATIONAL TELETRAFFIC CONGRESS, 17. - 24. Oktober 1979, XP002045440 TORREMOLINOS (SPAIN)
- KOERNER U ET AL: "OVERLOAD CONTROL IN COMMUNICATIONS NETWORKS" COUNTDOWN TO THE NEW MILENNIUM, PHOENIX, DEC. 2 - 5, 1991, Bd. 2 OF 3, 2. Dezember 1991, Seiten 1331-1335, XP000332869 INSTITUTE OF ELECTRICAL AND ELECTRONICS ENGINEERS

## Beschreibung

Die vorliegende Erfindung betrifft eine Vermittlungsvorrichtung nach dem Oberbegriff des Anspruches 1. Insbesondere betrifft die vorliegende Erfindung eine Vermittlungsvorrichtung zum Aufbau einer (Telefon-)Verbindung zwischen mindestens zwei (Telefon-) Teilnehmern. Die vorliegende Erfindung kann sowohl in einer öffentlichen Vermittlungsstelle, bei der neben lokalen Teilnehmern auch Zwischenamtsleitungen zur Verbindung an das öffentliche Telefonnetz angeschlossen sind, als auch in einer (privaten) Telefonnebenstellenanlage Anwendung finden.

Bekanntermaßen werden derartige Vermittlungsvorrichtungen zum Aufbau einer Telefonverbindung zwischen zwei Telefonendgeräten bzw. zwischen einem Endgerät und einer mit der Vermittlungsvorrichtung verbundenen Amtsleitung eingesetzt. Die Vermittlungsvorrichtung dient dabei insbesondere zur Auswahl und zum Schalten des entsprechenden Verbindungsweges. Infolge eines Verbindungsaufbaus werden über die Vermittlungsvorrichtung Sprachinformationen oder auch Daten zwischen den entsprehenden Teilnehmern ausgetauscht bzw. übertragen. Dabei ist in der Regel die Übertragung dieser Sprachinformationen gebührenpflichtig, d.h. die Teilnehmer müssen für die Dauer des Aufbaus und der Aufrechterhaltung der Verbindung Gebühren an den Betreiber der Vermittlungsvorrichtung sowie des daran angeschlossenen Telefonnetzes zahlen. Diese Gebühren werden im allgemeinen von dem Anrufer getragen.

Moderne Vermittlungsstellen bieten zusätzlich zu dem eigentlichen Verbindungsaufbau mit dem Zweck einer Sprachinformationübertragung weitere Dienste an, die von den daran angeschlossenen Teilnehmern kostenpflichtig in Anspruch genommen werden können. Einer dieser zusätzlichen Dienste ist beispielsweise die Mitteilung der Rufnummer, d.h. Telefonnummer, des Anrufers. Auf diese Weise wird dem Angerufenen bzw. dem Empfänger vor oder während des Aufbaus der Telefonverbindung die Rufnummer des Anrufers mitgeteilt und beispielsweise auf einem Display seines Telefonendgeräts dargestellt. Der Anrufer kann somit vor Annahme des Anrufes den Anrufer identifizieren. Es ist zudem bekannt, einen ankommenden Ruf auf einen belegten Teilnehmer, der bereits mit einem anderen Teilnehmer spricht, durchzuschalten. Dieser Vorgang wird im allgemeinen als "Anklopfen" bezeichnet, wobei dem Angerufenen der Eingang eines neuen Anrufs durch ein beispielsweise akustisches Signal mitgeteilt wird, mit dem ebenfalls die Rufnummer des Anrufers ausgegeben werden kann. Der Angerufene kann somit entscheiden, ob er die bestehende Verbindung beenden und den neu eingegangenen Anruf annehmen will. Ebenso ist möglich, zwischen den beiden Verbindungen zu wechseln. Bei digitalen Telefonnetzen, wie z.B. dem ISDN, wurden diese Dienste bereits weitgehend realisiert.

Für die Inanspruchnahme eines derartigen Dienstes, wodurch zusätzlich zu den Sprachinformationen weitere Informationen über die Vermittlungsvorrichtung bzw. den Verbindungsweg übertragen werden, wird in der Regel eine Pauschale, beispielsweise eine monatliche Grundgebühr, erhoben, die insbesondere unabhängig von der Dauer des Verbindungsaufbaus ist.

Eine derartige Vermittlungsvorrichtung umfaßt eine (nachfolgend vereinfacht als Zentral- oder Koordinationsprozessor bezeichnete) Zentral- oder Koordinationsprozessoreinrichtung, die die Übertragung der Sprach- und Zusatzinformationen zwischen zwei Teilnehmern bzw. einem Teilnehmer und einer öffentlichen Amtsleitung steuert. Des weiteren umfaßt die Vermittlungsvorrichtung mehrere Vermittlungseinheiten, an die jeweils eine Mehrzahl von Teilnehmern, d.h. Endgeräten, bzw. eine Mehrzahl von Zwischenamtsleitungen angeschlossen sind. Jede dieser Vermittlungseinheiten dient somit zur Verwaltung derjenigen Informationen, die sich auf die jeweils daran angeschlossenen Teilnehmer beziehen. Die Vermittlungseinheiten weisen getrennte Übertragungseinheiten für die Sprach- und Zusatzinformationen auf. Während der Zentralprozessor die einzelnen Vermittlungseinheiten koordiniert, besitzt jede Vermittlungseinheit eine (nachfolgend vereinfacht als Vermittlungsprozessor bezeichnete) Vermittlungsprozessoreinrichtung, welche zur Steuerung der entsprechenden Vermittlungseinheit vorgesehen ist und insbesondere die Übertragung der Sprach- bzw. Zusatzinformationen innerhalb einer Vermittlungseinheit koordiniert.

Die Übertragung der Rufnummer eines Anrufers erfolgt dabei beispielsweise wie folgt: Ein eingehender Anruf wird über die entsprechende Vermittlungsbaugruppe bzw. Vermittlungseinheit, an die der Anrufer angeschlossen ist, dem Zentralprozessor mitgeteilt, wobei dem Zentralprozessor zusätzlich die Rufnummer des Anrufers übermittelt wird. Der Zentralprozessor ermittelt aufgrund der von dem Anrufer gewählten Zielrufnummer den entsprechenden angerufenen Teilnehmer und steuert diejenige Vermittlungseinheit an, welche für den angerufenen Teilnehmer zuständig ist. Der in der angesteuerten Vermittlungseinheit vorhandene Vermittlungsprozessor greift auf eine Liste zu, in der zu jedem an diese Vermittlungseinheit angeschlossenen Teilnehmer vermerkt ist, ob der einzelne Teilnehmer für den Empfang und die Anzeige von Rufnummern technisch vorbereitet und auch dazu (beispielsweise durch Entrichtung einer monatlichen Pauschalgebühr) berechtigt ist. Die Vermittlungseinheit überprüft auf diese Weise, ob die Rufnummer des Anrufers an den angerufenen Teilnehmer übertragen werden kann. Das Ergebnis dieser Überprüfung wird von dem Vermittlungsprozessor der Übertragungseinheit dem Zentralprozessor mitgeteilt. In der Regel kann jede Vermittlungseinheit eine oder mehrere Übertragungseinheiten für die Übertragung von Rufnummern aufweisen. War das Ergebnis der Überprüfung durch die Vermittlungseinheit hinsichtlich der Empfangsberechtigung der Rufnummer eines Anrufers positiv, wählt der Zentralprozessor eine der Übertragungseinheiten auf irgendeiner Vermittlungseinheit aus und teilt dieser Übertragungseinheit die Rufnummer des Anrufers mit, so daß die ausgewählte Übertragungseinheit die Rufnummer an den gewünschten Teilnehmer absenden kann.

Da der in jeder Vermittlungseinheit vorgesehene Vermittlungsprozessor auch zur Steuerung bzw. Koordinierung der Übertragung von Sprachinformationen über die entsprechende Vermittlungseinheit dient, ist ersichtlich, daß durch die Bereitstellung der Möglichkeit, neben Sprachinformationen weitere Zusatzinformationen, wie beispielsweise die Rufnummer eines Anrufers, zu übertragen, eine zusätzliche Belastung des Vermittlungsprozessors der entsprechenden Vermittlungseinheit hervorgerufen wird. Da jeder Vermittlungsprozessor zum Auf- bzw. Abbau der einzelnen Verbindungen dient, steigt bei kürzeren Verbindungsdauern die Belastung des Vermittlungsprozessors. Insbesondere ist die Belegungsdauer einer für die Übertragung der Rufnummer vorgesehenen Übertragungseinheit innerhalb einer Vermittlungseinheit relativ kurz und beträgt beispielsweise weniger als 3 Sekunden, so daß die entsprechende Übertragungseinheit nach Eingang des Auftrags zur Übertragung der Rufnummer diesen Auftrag in ein entsprechendes Signal an den gewünschten Teilnehmer innerhalb von 3 Sekunden umsetzt. Aufgrund dieser kurzen Belegungsdauer der für die Übertragung der Rufnummern vorgesehenen Übertragungseinheiten kann es zu einer intensiven Nutzung dieses Leistungsmerkmals kommen, so daß eine Überbelastung des Vermittlungsprozessors auftreten kann. Eine Überbelastung des Vermittlungsprozessors geht jedoch zu Lasten der eigentlichen Vermittlungstechnik, d.h. des Verbindungsaufbaus für Sprachinformationen, da eine Vermittlungseinheit im Falle einer Überbelastung des entsprechenden Vermittlungsprozessors mit Selbsteinschränkung reagieren muß, d.h. neue Belegungswünsche abweist, so daß aufgrund einer intensiven Nutzung der Möglichkeit der Rufnummernübertragung die eigentliche Vermittlungstechnik, d.h. die eigentliche für die Übertragung von Sprachinformationen dienende Verbindung, verdrängt werden kann. Da im Falle einer Überbelastung die entsprechende Vermittlungseinheit abhängig von dem Überlastgrad einen bestimmten Prozentsatz (beispielsweise zwischen 25 und 100 %) der neu eingehenden Belegungswünsche ablehnt, gehen diese Anrufe verloren. Damit gehen dem Betreiber auch die Gebühren verloren, die ansonsten bei diesen Rufen angefallen wären.

Aus den Dokumenten EP 0 171 16.1 A2 und EP 0 177 735 A2 sind Vermittlungseinheiten der oben genannten Art bekannt, die abhängig von dem Überlastgrad einen bestimmten Prozentsatz der neu eingehenden Belegungswünsche ablehnen.

Der vorliegenden Erfindung liegt nun die Aufgabe zugrunde, eine Vermittlungsvorrichtung nach dem Oberbegriff des An spruches 1 derart auszugestalten, daß eine intensive Nutzung der Übertragungsmöglichkeit von Zusatzinformationen nicht zu Lasten der normalen Rufbearbeitung, d.h. Übertragung von Sprachinformationen, geht.

Diese Aufgabe wird erfindungsgemäß durch eine Vermittlungsvorrichtung gemäß Anspruch 1 gelöst.

Die Unteransprüche beschreiben vorteilhafte Ausführungsformen der vorliegenden Erfindung.

Erfindungsgemäß sind Überwachungsmittel vorgesehen, die den Belastungsgrad der einzelnen Vermittlungsprozessoren überwachen und nach Feststellen einer drohenden Überbelastung eines Vermittlungsprozessors die Freigabe der für die Übertragung von Zusatzinformationen, d.h. beispielsweise der Rufnummern, vorgesehenen Übertragungseinheit einer beliebigen Vermittlungseinheit verzögern.

Insbesondere wird auf diese Weise die Belegungsdauer der für die Übertragung von Zusatzinformationen vorgesehenen Übertragungseinheit abhängig von dem Belastungsgrad des entsprechenden Vermittlungsprozessors künstlich verlängert. Die Belegung der für die Übertragung von Zusatzinformationen vorgesehenen Übertragungseinheit einer Vermittlungseinheit ist dem Zentralprozessor bekannt. Der Zentralprozessor wählt bei Eingang eines Auftrags zur Rufnummernübertragung eine zunächst als frei gekennzeichnete Übertragungseinheit aus und markiert diese als belegt. Nach Beendigung der Rufnummernübertragung meldet die entsprechende Vermittlungseinheit dem Zentralprozessor wieder die Freigabe der Übertragungseinheit. Da im Falle einer Überbelastung eines Vermittlungsprozessors die für die Übertragung von Zusatzinformationen vorgesehene Übertragungseinheit dem Zentralprozessor länger als normalerweise erforderlich als belegt mitgeteilt wird, kann diese Übertragungseinheit der entsprechenden Vermittlungseinheit nicht für die Übertragung von Rufnummerinformationen oder sonstigen endgerätebezogenen Zusatzinformationen verwendet werden, so daß in der entsprechenden Vermittlungseinheit keine zusätzliche Belastung des Vermittlungsprozessors durch die Übertragung derartiger Zusatzinformationen durch diese verlängert belegte Übertragungseinheit auftreten kann. Somit kann sich der Vermittlungsprozessor der entsprechenden Vermittlungseinheit erholen und es ist stets ausreichend Kapazität für die "normale" Rufverarbeitung, d.h. für die eigentliche Vermittlungstechnik zur Übertragung von Sprachinformationen, vorhanden.

Die oben beschriebene Abwehrmaßnahme wird vorteilhafterweise bereits aktiv, bevor die tatsächliche Belastung des entsprechenden Vermittlungsprozessors so hoch wird, daß neu eingehende Anrufe abgewiesen werden müssen. Dies bedeutet, daß die erfindungsgemäß vorgesehenen Überwachungsmittel bereits eine drohende Überbelastung des Vermittlungsprozessors erkennen, ehe tatsächlich eine Überbelastung des Vermittlungsprozessors auftreten kann. Aus diesem Grunde wird ein bestimmter Belastungsgrenzwert definiert, bei dessen Überschreiten die Überwachungsmittel ansprechen und die Belegungszeit der für die Übertragung von Zusatzinformationen vorgesehenen Übertragungseinheit künstlich verlängern. Dieser Belastungsgrenzwert liegt unterhalb desjenigen Belastungsgrads, der tatsächlich zu einer Überbelastung des entsprechenden Vermittlungsprozessors führen würde.

Erfindungsgemäß wird auf diese Weise der eigentlichen gebührenpflichtigen Vermittlungstechnik ,zur Übertragung von Sprachinformationen ein gewisser Vorrang vor der in der Regel pauschal vergebührten Übertragung von Zusatzinformationen, wie z.B. der Übertragung der Rufnummer eines Anrufers, eingeräumt.

Die Erfindung wird nachfolgend unter Bezugnahme auf die beigefügte Zeichnung anhand eines bevorzugten Ausführungsbeispiels beschrieben.
Fig. 1 zeigt ein bevorzugtes Ausführungsbeispiel der erfindungsgemäßen Vermittlungsvorrichtung,
Fig. 2 und 3 zeigen Darstellungen zur Erläuterung der Ermittlung einer drohenden Überbelastung einer Vermittlungsprozessoreinrichtung in einer in Fig. 1 dargestellten Vermittlungseinheit, und
Fig. 4 zeigt eine Tabelle zur Darstellung der Auswirkung der Anwendung des erfindungsgemäßen Prinzips.

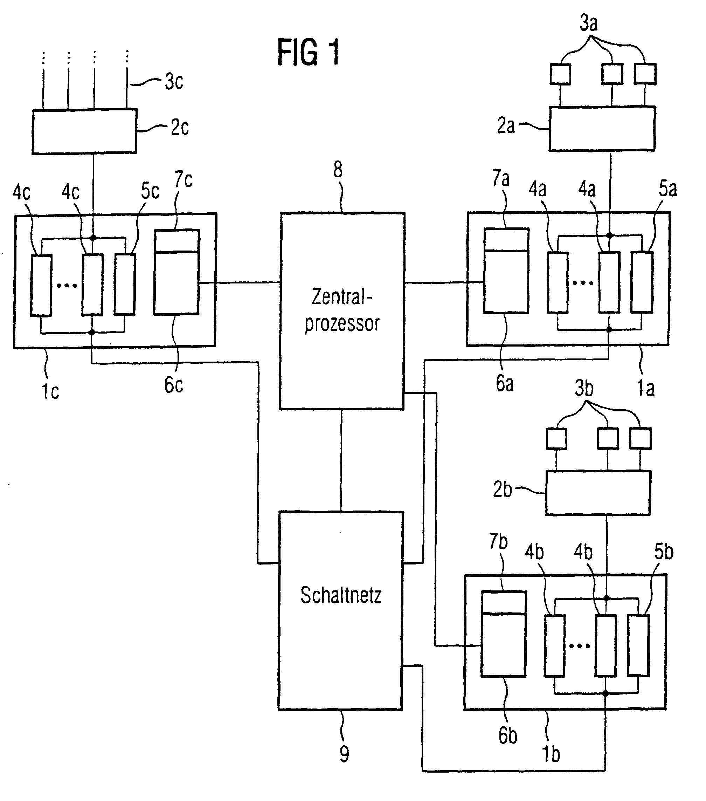

Die vorliegende Erfindung wird nachfolgend unter Bezugnahme auf ein in Fig. 1 dargestelltes bevorzugtes Ausführungsbeispiel beschrieben. Dabei handelt es sich insbesondere um eine im Sinne einer öffentlichen Vermittlungsstelle ausgebildete Vermittlungsvorrichtung. Es wird jedoch darauf hingewiesen, daß die vorliegende Erfindung nicht auf derartige öffentliche Vermittlungsstellen beschränkt ist, sondern durchaus auch bei (privaten) Telefonnebenstellenanlagen Anwendung finden kann.

Des weiteren wird die Erfindung nachfolgend für den Fall beschrieben, daß neben den eigentlichen Sprachinformationen die Rufnummer eines Anrufers als Zusatzinformation über die Vermittlungsvorrichtung übertragen werden soll. Die vorliegende Erfindung ist jedoch ebenfalls nicht auf diese Ausführungsform beschränkt, sondern ist allgemein dort anwendbar, wo neben der eigentlichen Übertragung von Sprachinformationen zusätzliche Dienste von der Vermittlungsvorrichtung bereitgestellt werden, wobei infolge dieser Dienste Zusatzinformationen an angeschlossene Endgeräte übertragen werden können, die zu einer zusätzlichen Belastung der Vermittlungsprozessoren der einzelnen Vermittlungseinheiten führen. So ist beispielsweise denkbar, daß anstelle der Rufnummer eines Anrufers auch der Name des Anrufers etc. übertragen werden kann.

Bei dem in Fig. 1 dargestellten Ausführungsbeispiel ist eine (nachfolgend vereinfacht als Zentral- oder Koordinationsprozessor bezeichnete) Zentral- oder Koordinationsprozessoreinrichtung 8 vorgesehen, die die Übertragung sämtlicher Informationen zwischen mehreren Vermittlungseinheiten 1a - 1c koordiniert. Da es sich bei dem in Fig. 1 gezeigten Ausführungsbeispiel um eine als öffentliche Vermittlungsstelle ausgestaltete Vermittlungsvorrichtung handelt, ist neben mehreren Vermittlungseinheiten 1a, 1b, an die direkt lokale Teilnehmer bzw. Endgeräte 3a, 3b angeschlossen sind, mindestens eine Vermittlungseinheit 1c vorgesehen, an die eine oder mehrere Zwischenamtsleitungen 3c angeschlossen sind, um somit auch eine Verbindung über das öffentliche Netz mit entfernten Teilnehmern aufbauen zu können. Die Endgeräte 3a, 3b bzw. die Zwischenamtsleitungen 3c sind über vorzugsweise digitale Schnittstellen 2a - 2c an die entsprechende Vermittlungseinheit 1a - 1c angeschlossen.

Die einzelnen Vermittlungseinheiten 1a - 1c sind im wesentlichen identisch aufgebaut und beinhalten jeweils eine (nachfolgend vereinfacht als Vermittlungsprozessor bezeichnete) Vermittlungsprozessoreinrichtung 6a - 6c und eine erste Übertragungseinheit 5a - 5c zum Übertragen von Sprachinformationen. Vorzugsweise besitzt auch jede Vermittlungseinheit 1a - 1c mindestens eine zweite Übertragungseinheit 4a - 4c zum Übertragen von Zusatzinformationen, im vorliegenden Fall insbesondere zum Übertragen der Rufnummer eines Anrufers. Vorteilhafterweise kann jede Vermittlungseinheit 1a - 1c mehrere dieser zweiten Übertragungseinheiten für die Übertragung von Rufnummerinformationen aufweisen. Erfindungsgemäß genügt es jedoch, wenn zumindest eine der Vermittlungseinheiten 1a - 1c mindestens eine zweite Übertragungseinheit 4a - 4c zum Übertragen der Zusatzinformationen besitzt, während andere Vermittlungseinheiten 1a - 1c auch ohne eine derartige zweite Übertragungseinheit ausgerüstet sein können.

Des weiteren ist ein Schaltnetzwerk 9 vorgesehen, welches zur schaltungstechnischen Realisierung einer (Telefon-)Verbindung zwischen den einzelnen Vermittlungseinheiten 1a - 1c dient, wobei der Verbindungsweg innerhalb des Schaltnetzwerks 9 abhängig von den an der aufzubauenden Verbindung beteiligten Teilnehmern durch den Zentralprozessor 8 festgelegt bzw. ausgewählt wird.

Erfindungsgemäß sind Überwachungsmittel vorgesehen, die den Belastungsgrad der einzelnen Vermittlungsprozessoren 6a - 6c überwachen und bei Überschreiten eines bestimmten Belastungsgrades eines Vermittlungsprozessors die Freigabe der zweiten Übertragungseinheiten 4a - 4c der entsprechenden Vermittlungseinheit 1a - 1c verzögern. Bei dem in Fig. 1 gezeigten Ausführungsbeispiel sind für jede einzelne Vermittlungseinheit 1a-1c getrennte Überwachungsmittel 7a - 7c vorgesehen, die insbesondere in den einzelnen Vermittlungsprozessor 6a - 6c integriert sind. Es ist jedoch auch denkbar, eine zentrale Überwachungseinrichtung vorzusehen, die sämtliche Vermittlungsprozessoren 6a - 6c überwacht und bei Erkennen einer drohenden Überbelastung eines dieser Vermittlungsprozessoren entsprechend reagiert.

Abgesehen von der Funktion der Überwachungsmittel 7a - 7c entspricht die Funktionsweise der in Fig. 1 gezeigten Vermittlungsvorrichtung im wesentlichen derjenigen der eingangs beschriebenen bekannten Vermittlungsvorrichtungen.

Ein eingehender Anruf eines Teilnehmers wird über die Schnittstelle 2a - 2c und die erste Übertragungseinheit 5a - 5c sowie den Vermittlungsprozessor 6a - 6c der entsprechenden Vermittlungseinheit 1a - 1c dem Zentralprozessor 8 zusammen mit der Zielrufnummer eines gewünschten Teilnehmers mitgeteilt. Der Zentralprozessor 8 ermittelt aufgrund der auf diese Weise empfangenen Zielrufnummer diejenige Vermittlungseinheit 1a - 1c, an die der entsprechende Teilnehmer angeschlossen ist. Abhängig von der somit ausgewählten Vermittlungseinheit steuert der Zentralprozessor 8 das Schaltnetzwerk 9 derart, daß eine Verbindung zwischen der für den Anrufer verantwortlichen Vermittlungseinheit und der für den Empfänger verantwortlichen Vermittlungseinheit aufgebaut wird. Jede Vermittlungseinheit 1a - 1c beinhaltet zudem ein (der Einfachheit halber in Fig. 1 nicht dargestelltes) internes Schaltnetz, welches von dem entsprechenden Vermittlungsprozessor entsprechend angesteuert wird, um auf diese Weise die Verbindungen der Teilnehmer über das interene Schaltnetz zu dem zentralen Hauptschaltnetz 9 zu steuern. Nach Aufbau der Verbindung und Annehmen der Verbindung durch den angerufenen Teilnehmer kann das gewünschte Gespräch zwischen den Teilnehmern geführt werden, wobei die Sprachinformationen von den Vermittlungsprozessoren der entsprechenden Vermittlungseinheiten gesteuert übertragen werden.

Bei dem in Fig. 1 gezeigten Ausführungsbeispiel wird neben den Sprachinformationen auch eine Rufnummerinformation zwischen den einzelnen Teilnehmern übertragen, um dem angerufenen Teilnehmer die Rufnummer des Anrufers mitzuteilen. Mit einem eingehenden Anruf eines Teilnehmers wird dem Zentralprozessor 8 auch die Rufnummer des Anrufers mitgeteilt. Nachdem der Zentralprozessor 8 - wie oben beschrieben worden ist - die für den Zielteilnehmer verantwortliche Vermittlungseinheit 1a - 1c ausgewählt hat, teilt der Zentralprozessor 8 dem Vermittlungsprozessor 6a - 6c der entsprechenden Vermittlungseinheit 1a - 1c mit, daß eine Rufnummerinformation vorliegt. Der Vermittlungsprozessor 6a - 6c der entsprechenden Vermittlungseinheit greift daraufhin auf eine interne Liste zu, in der für jeden von der entsprechenden Vermittlungseinheit angesteuerten Teilnehmer vermerkt ist, ob der entsprechende Teilnehmer technisch für den Empfang der Rufnummer eines Anrufers ausgestattet und zudem zum Empfang einer Rufnummerinformation berechtigt ist. Die Berechtigung erwirbt ein Teilnehmer in der Regel durch Zahlung einer pauschalen Monatsgebühr an den Betreiber der Vermittlungsvorrichtung. Auf diese Weise kann der entsprechende Vermittlungsprozessor 6a - 6c dem Zentralprozessor 8 mitteilen, ob die Rufnummerinformation an den angerufenen Teilnehmer übertragen werden kann bzw. soll. Falls diese Rückmeldung positiv ausfällt, greift der Zentralprozessor 8 seinerseits auf eine Liste zu, in der für jede Vermittlungseinheit 1a - 1c vermerkt ist, welche der darin angeordneten zweiten Übertragungseinheiten 4a - 4c augenblicklich belegt oder frei sind. Der Zentralprozessor 8 ermittelt auf diese Weise eine beliebige, in der Liste als frei gekennzeichnete zweite Übertragungseinheit und wählt diese für die Übertragung der Rufnummerinformation des Anrufers aus. Der Zentralprozessor 8 übermittelt dieser zweiten Übertragungseinheit die entsprechende Rufnummerinformation. Vorzugsweise sind die einzelnen zweiten Übertragungseinheiten, die zur Übertragung der Rufnummerinformationen vorgesehen sind, durch Modem-Tongeneratoren gebildet, die beispielsweise mehrere Sender zum Senden der Rufnummerinformationen an die daran angeschlossenen Endgeräte aufweisen. Jeder dieser Modem-Tongeneratoren kann insbesondere drei FSK-Sender (Frequency Shift Keying) aufweisen. Des weiteren kann jeder Modem-Tongenerator mit einem für Testzwecke vorgesehenen Empfänger versehen sein. Aufgrund der Steuerung durch den entsprechenden Vermittlungsprozessor 6a - 6c wandelt die von dem Zentralprozessor 8 ausgewählte zweite Übertragungseinheit 4a - 4c die zu übertragende Rufnummerinformation in ein FSK-Signal um und überträgt dieses an den gewünschten Zielteilnehmer. Vorzugsweise wird die Rufnummerinformation an den gewünschten Zielteilnehmer übertragen, ehe dieser das entsprechende Gespräch durch Abheben des Hörers angenommen hat. So kann beispielsweise die Rufnummerinformation zwischen dem ersten und zweiten Klingeln bei dem angerufenen Endgerät übertragen werden.

Nachdem der Zentralprozessor 8 eine der zweiten Übertragungseinheiten 4a - 4c für die Übertragung der Rufnummerinformation ausgewählt hat, wird in der entsprechenden internen Liste des Zentralprozessors 8 vermerkt, daß die ausgewählte zweite Übertragungseinheit augenblicklich belegt ist. In der Regel beträgt die durchschnittliche Belegungsdauer zwischen dem Eingang des Auftrags zur Übertragung der Rufnummerinformationen und der Umsetzung der Rufnummerinformationen in ein entsprechendes Signal sowie der Übertragung dieses Signals an den gewünschten Teilnehmer in einer zweiten Übertragungseinheit ca. 3 Sekunden. Nach Abschluß der Rufnummerübertragung teilt der entsprechende Vermittlungsprozessor 6a - 6c dem Zentralprozessor 8 mit, daß die zuvor ausgewählte zweite Übertragungseinheit 4a - 4c wieder für zukünftige Übertragungen von Rufnummerinformationen zur Verfügung steht, d.h. der Vorprozessor 6a - 6c gibt die entsprechende zweite Übertragungseinheit 4a - 4c wieder frei, so daß der Zentralprozessor 8 in seiner internen Liste vermerken kann, daß diese zweite Übertragungseinheit 4a - 4c wieder zur Verfügung steht. Dem Zentralprozessor 8 sind somit jederzeit sämtliche zur Verfügung stehenden bzw. besetzten zweiten Übertragungseinheiten 4a - 4c bekannt.

Aus obiger Beschreibung ist ersichtlich, daß die Vermittlungsprozessoren 6a - 6c sowohl zur Steuerung der ersten Übertragungseinheiten 5a - 5c als auch zur Steuerung der zweiten Übertragungseinheiten 4a - 4c vorgesehen sind, so daß bei Belegung einer dieser Übertragungseinheiten 4a - 4c bzw. 5a - 5c eine Belastung des entsprechenden Vorprozessors 6a - 6c hervorgerufen wird.

Erfindungsgemäß wird vorgeschlagen, den Belastungsgrad des Vorprozessors einer Vermittlungseinheit zu überwachen. Zu diesem Zweck sind die Überwachungsmittel 7a - 7c vorgesehen, welche den Belastungsgrad des entsprechenden Vorprozessors 6a - 6c überwachen und bei Erkennen eines bestimmten Belastungsgrads dafür sorgen, daß sämtliche zweiten Übertragungseinheiten 4a - 4c der entsprechenden Vermittlungseinheit 1a - 1c länger als ursprünglich vorgesehen gesperrt bleiben. Zu diesem Zweck verzögern die Überwachungsmittel 7a - 7c durch den Vorprozessor 6a - 6c nach Erkennen einer den bestimmten Belastungsgrad überschreitenden Belastung des entsprechenden Vermittlungsprozessors 6a - 6c die Freigabe sämtlicher zweiten Übertragungseinheiten 4a - 4c der entsprechenden Vermittlungseinheit.

Insbesondere wird die Dauer dieser Verzögerung abhängig von dem Belastungsgrad des entsprechenden Vermittlungsprozessors gewählt, d.h. mit steigendem Belastungsgrad des entsprechenden Vermittlungsprozessors wird die Freigabe der entsprechenden zweiten Übertragungseinheiten durch die Überwachungsmittel länger verzögert. Auf diese Weise wird erfindungsgemäß sichergestellt, daß - da in dem Zentralprozessor 8 die künstlich verlängert gesperrten zweiten Übertragungseinheiten einer Vermittlungseinheit als nicht verfügbar gekennzeichnet sind - keine Belastung des entsprechenden Vermittlungsprozessors durch Rufnummerübertragungen auftreten kann, so daß sich der entsprechende Vermittlungsprozessor wieder erholen kann und ausreichend Kapazitäten des Vermittlungsprozessors für die eigentliche Vermittlungstechnik, d.h. die Steuerung der Übertragung von Sprachinformationen, zur Verfügung stehen.

Damit nach Möglichkeit kein Überlastfall auftritt und somit vermieden wird, daß von einem überbelasteten Vermittlungsprozessor Anrufe abgewiesen werden, wodurch dem Betreiber aufgrund der abgewiesenen Anrufe Gebühren verloren gehen würden, wird mit der Freigabeverzögerung der zweiten Übertragungseinheiten bereits früher begonnen als mit der tatsächlichen Abweisung von Anrufen.

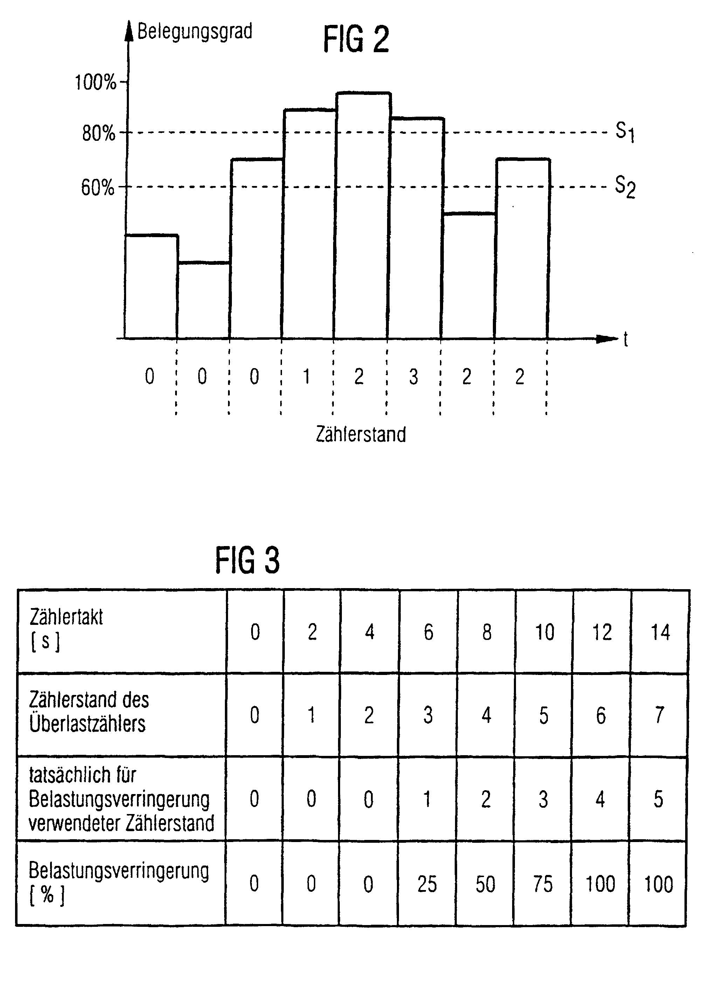

Die Ermittlung der geeigneten Zeitverzögerung für die Freigabe der zweiten Übertragungseinheiten durch die Überwachungsmittel wird nachfolgend unter Bezugnahme auf Fig. 2 und 3 erläutert.

Fig. 2 zeigt den zeitlich innerhalb mehrerer Takteinheiten an einem der Vermittlungsprozessoren auftretenden Belastungswert, der von den entsprechenden Überwachungsmitteln überwacht wird. Vorzugsweise ist ein oberer Grenzwert S₁ und ein unterer Grenzwert S₂ für den Belastungswert definiert. Überschreitet der Belastungswert des überwachten Vermittlungsprozessors den oberen Grenzwert S₁, wird ein interner Zähler inkrementiert, während bei Unterschreiten des unteren Grenzwertes S₂ der interne Zähler dekrementiert wird. Liegt der Belastungswert zwischen den beiden Grenzwerten S₂ und S₁, so bleibt der Zählerstand unverändert. Ausgehend von diesen Voraussetzungen ergibt sich somit für den in Fig. 2 dargestellten Belegungsverlauf des Vermittlungsprozessors der entsprechend dargestellte Zählerstand. Sobald ein Zählerstand größer als Null auftritt, schließen die entsprechend vorgesehenen Überwachungsmittel darauf, daß die Gefahr einer Überbelastung des überwachten Vermittlungsprozessors gegeben ist, und verursachen eine Verzögerung der Freigabe der entsprechenden zweiten Übertragungseinheiten, um eine Erholung des überwachten Vermittlungsprozessors sicherzustellen. Dabei wird die Verzögerung der Freigabe der zweiten Übertragungseinheiten abhängig von dem Belastungs- bzw. Belegungsgrad des überwachten Vermittlungsprozessors eingestellt, d.h. abhängig von dem Zählerstand des Überlastzählers wird die Dauer der Verzögerung verlängert oder verkürzt.

Die Verzögerung der Freigabe der zweiten Übertragungseinheiten setzt sofort mit Auftreten eines Zählerstandes größer als Null, d.h. nach Erkennen einer bevorstehenden Überbelastung des überwachten Vermittlungsprozessors, ein. Um jedoch ankommende Teilnehmeranrufe nicht voreilig abweisen zu müssen, wird zunächst noch die Dauer einer bestimmte Zeitspanne abgewartet und ankommende Teilnehmeranrufe nach Ablauf dieser Zeitspanne nur dann abgewiesen, falls auch nach Ablauf dieser Zeitspanne noch eine drohende Überbelastung des überwachten Vermittlungsprozessors gegeben ist, d.h. beispielsweise auch nach Ablauf dieser Zeitspanne der Überlastzähler noch einen Zählerstand größer als Null aufweist. Somit setzt die Verzögerung der Freigabe der zweiten Übertragungseinheiten vor einer wirklich eintretenden Überlast des überwachten Vermittlungsprozessors ein.

Dies soll nachfolgend anhand Fig. 3 verdeutlicht werden.

Wie bereits in Fig. 2 gezeigt ist, wird von den Überwachungsmitteln regelmäßig der Belegungs- bzw. Belastungsgrad eines entsprechenden Vermittlungsprozessors überwacht. Gemäß Fig. 3 beträgt die entsprechende Taktperiode 2 Sekunden. Jeweils nach 5 Ablauf einer Taktperiode ermitteln die Überwachungsmittel den Belastungsgrad des von ihm überwachten Vermittlungsprozessors und erzeugen den bereits anhand von Fig. 2 erläuterten Zählerstand des Überlastzählers. Dabei wird in Fig. 3 davon ausgegangen, daß über den in Fig. 3 berücksichtigten Überwachungs-bereich stets der Belegungsgrad des überwachten Vermittlungsprozessors oberhalb der in Fig. 2 dargestellten oberen Schwelle S₁ liegt, so daß der Überlastzähler kontinuierlich inkrementiert wird. In der Regel ist eine Obergrenze für den Überlastzähler vorgesehen, so daß dieser nur Zählerwerte innerhalb eines bestimmten Bereichs, beispielsweise zwischen 0 und 9, annehmen kann.

Bei dem in Fig. 3 gezeigten Beispiel wird als die zuvor genannte Zeitspanne eine zwei Taktperioden umfassende Zeitspanne angenommen. Demnach ergibt sich für den tatsächlich für die eigentliche Belastungsverringerung des überwachten Vermittlungsprozessors verwendeten Zählerstand der in der dritten Zeile von Fig. 3 dargestellte Zählerverlauf, der dem Zählerstand des Überlastzählers um zwei Taktperioden nachläuft. Nach Ablauf dieser zwei Taktperioden überprüfen die Überwachungsmittel, ob nach Feststellen der zuvor aufgetretenen Überlastgefahr tatsächlich noch eine Überlastgefahr für den überwachten Vermittlungsprozessor gegeben ist. Falls ja, werden abhängig von dem in der dritten Zeile von Fig. 3 dargestellten Zählerstand ankommende Teilnehmerrufversuche abgewiesen, so daß sich abhängig von dem in Fig. 3 dargestellten Zählerstand die in der vierten Zeile von Fig. 3 gezeigten prozentualen Lastungsverringerungen des überwachten Vermittlungsprozessors ergeben, wobei beispielsweise für alle Zählerwerte größer als drei eine hundertprozentige Belastungsverringerung auftritt.

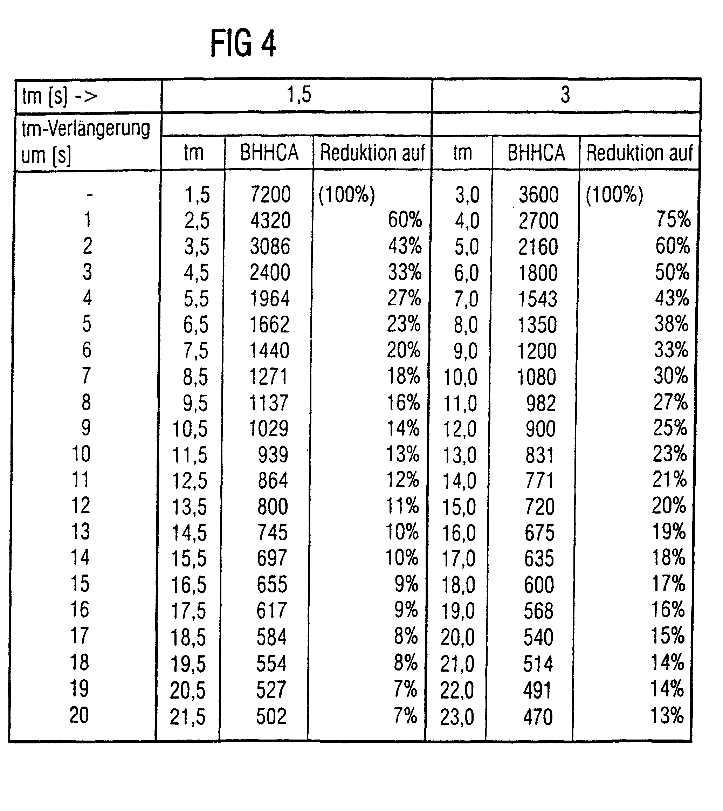

Fig. 4 zeigt in Tabellenform die prozentuale Reduktion des Rufnummerinformation-Verkehrs bei einer vollen Ausnutzung der in einer Vermittlungseinheit vorhandenen zweiten Übertragungseinheiten. Dabei wird für die mittlere Belegungsdauer tm der zweiten Übertragungseinheiten (ohne Verzögerung der Freigabe) einmal der Wert 1,5s und einmal der Wert 3s angesetzt.

Aus der in Fig. 4 dargestellten Tabelle ist für jeden Verzögerungswert der zweiten Übertragungseinheiten die entsprechende Gesamt-Belegungszeit der zweiten Übertragungseinheiten und die sich daraus ergebenden, von den zweiten Übertragungseinheiten verarbeitete Gesamtanzahl von Rufanfragen BHHCA (Busy Hour Half Call Attempts) dargestellt. In der jeweiligen dritten Spalte ist des weiteren prozentual die sich aus der Belegungsverlängerung ergebende Reduktion der Belastung der entsprechenden Vermittlungsprozessoren durch die zweiten Übertragungseinheiten dargestellt. Aus Fig. 4 ist ersichtlich, daß sich die von den zweiten Übertragungseinheiten verarbeiteten Rufanfragen mit steigender Freigabeverzögerung, d.h. steigender Belegungsdauer, der zweiten Übertragungseinheiten verringern, so daß die Belastung des entsprechenden Vermittlungsprozessors sinkt.

## Patentansprüche

1. Vermittlungsvorrichtung zum Aufbau einer Verbindung zwischen mindestens zwei an die Vermittlungsvorrichtung anschließbaren Endgeräten (3a, 3b) oder zwischen einem an die Vermittlungsvorrichung anschließbaren Endgerät (3a, 3b) und einer mit der Vermittlungsvorrichtung verbundenen Amtsleitung (3c),
mit mindestens zwei Vermittlungseinheiten (1a - 1c), die jeweils mindestens einem Endgerät (3a, 3b) oder mindestens einer Amtsleitung (3c) zugeordnet sind,
wobei jede Vermittlungseinheit (1a - 1c) eine erste Übertragungseinheit (5a - 5c) zum Übertragen von Sprachinformationen und mindestens eine der Vermittlungseinheiten (1a - 1c) mindestens eine zweite Übertragungseinheit (4a - 4c) zum Übertragen von endgerätebezogenen Zusatzinformationen an mindestens eine andere Vermittlungseinheit aufweist, und
wobei jeder Vermittlungseinheit (1a - 1c) eine Vermittlungsprozessoreinrichtung (6a - 6c) zur Steuerung der Vermittlungseinrichtung zugeordnet ist,
**dadurch gekennzeichnet,**
**daß** Überwachungsmittel (7a - 7c) vorgesehen sind, welche dazu geeignet sind, den Belastungsgrad der Vermittlungsprozessoreinrichtung (6a - 6c) zu überwachen und bei Feststellen eines bestimmten Belastungsgrades (S₁) der Vermittlungsprozessoreinrichtung (6a - 6c) die Freigabe der mindestens einen zweiten Übertragungseinheit (4a - 4c) der entsprechenden Vermittlungseinheit (1a - 1c) für die Übertragung der endgerätebezogenen Zusatzinformationen zu verzögern.

2. Vermittlungsvorrichtung nach Anspruch 1,
**dadurch gekennzeichnet,**
**daß** jede Vermittlungseinheit (1a - 1c) Überwachungsmittel (7a - 7c) zur Überwachung des Belastungsgrads der entsprechenden Vermittlungsprozessoreinrichtung (6a - 6c) aufweist.

3. Vermittlungsvorrichtung nach Anspruch 2,
**dadurch gekennzeichnet,**
**daß** die Überwachungsmittel (7a - 7c) in die Vermittlungsprozessoreinrichtung (6a - 6c) der entsprechenden Vermittlungseinheit (1a - 1c) integriert sind.

4. Vermittlungsvorrichtung nach einem der vorhergehenden Ansprüche,
**gekennzeichnet durch**
eine Zentralprozessoreinrichtung (8) zum Steuern der Sprach- und Zusatzinformationsübertragung zwischen den Vermittlungseinheiten (1a - 1c),
wobei die Vermittlungsprozessoreinrichtungen dazu geeignet sind, (6a - 6c) der einzelnen Vermittlungseinheiten (1a - 1c) der Zentralprozessoreinrichtung (8) die Freigabe der zweiten Übertragungseinheit (4a - 4c) der entsprechenden Vermittlungseinheit (1a - 1c) für die Übertragung der Endgeräte bezogenen Zusatzinformationen mit zu teilen, und
wobei die Zentralprozessoreinrichtung dazu geeignet ist, (8) nur eine von einer entsprechenden Vermittlungsprozessoreinrichtung (6a - 6c) freigegebene zweite Übertragungseinheit (4a - 4c) für die Übertragung der endgerätebezogenen Zusatzinformationen auszuwählen.

5. Vermittlungsvorrichtung nach einem der vorhergehenden Ansprüche,
**dadurch gekennzeichnet,**
**daß** die Überwachungsmittel (6a - 6c) dazu geeignet sind, die Verzögerung der Freigabe der zweiten Übertragungseinheit (4a - 4c) einer entsprechenden Vermittlungseinheit (1a - 1c) mit steigendem Belastungsgrad der entsprechenden Vermittlungsprozessoreinrichtung (6a - 6c) zu verlängern.

6. Vermittlungsvorrichtung nach einem der vorhergehenden Ansprüche,
**dadurch gekennzeichnet,**
**daß** jede Vermittlungseinheit (1a - 1c) mehrere zweite Übertragungseinheiten (4a - 4c) für die Übertragung der endgerätebezogenen Zusatzinformationen umfaßt, wobei die Überwachungsmittel (7a - 7c) dazu geeignet sind, nach Feststellen des bestimmten Belastungsgrades der entsprechenden Vermittlungsprozessoreinrichtung (6a - 6c) die Freigabe sämtlicher zweiten Übertragungseinheiten (4a - 4c) der entsprechenden Vermittlungseinheit (1a - 1c) zu verzögern.

7. Vermittlungsvorrichtung nach einem der vorhergehenden Ansprüche,
**dadurch gekennzeichnet,**
**daß** die endgerätebezogenen Zusatzinformationen die Rufnummer eines anrufenden Endgeräts (3a, 3b) umfassen.

8. Vermittlungsvorrichtung nach einem der vorhergehenden Ansprüche,
**dadurch gekennzeichnet,**
**daß** die Überwachungsmittel (7a - 7c) Zählermittel umfassen,
wobei die Überwachungsmittel dazu geeignet sind, in regelmäßigen Abständen den Belastungsgrad der Vermittlungsprozessoreinrichtung (6a - 6c) abzufragen und die Zählermittel bei Überschreiten des bestimmten Belastungsgrades (S₁) zu inkrementieren.

9. Vermittlungsvorrichtung nach Anspruch 8,
**dadurch gekennzeichnet,**
**daß** die Überwachungsmittel dazu geeignet sind, (7a - 7c) bei Unterschreiten eines bestimmten unteren Belastungsgrades (S₂) der Vermittlungsprozessoreinrichtung (6a - 6c) die Zählermittel zu dekrementieren.

10. Vermittlungsvorrichtung nach Anspruch 8 oder 9,
**dadurch gekennzeichnet,**
**daß** die Überwachungsmittel (7a - 7c) dazu geeignet sind, die Dauer der Verzögerung der Freigabe der mindestens einen zweiten Übertragungseinheit (4a - 4c) einer Vermittlungseinheit (1a - 1c) nach Feststellen einer Überschreitung des bestimmten Belastungsgrades (S₁) der entsprechenden Vermittlungsprozessoreinrichtung (6a - 6c) mit steigendem Zählerstand der Zählermittel zu verlängern.

11. Vermittlungsvorrichtung nach einem der vorhergehenden Ansprüche,
**dadurch gekennzeichnet,**
**daß** die Überwachungsmittel (7a - 7c) dazu geeignet sind, nach Feststellen einer Überschreitung des bestimmten Belastungsgrades (S₁) einer Vermittlungsprozessoreinrichtung (6a - 6c), die Freigabeverzögerung der mindestens einen zweiten Übertragungseinheit (4a - 4c) der entsprechenden Vermittlungseinheit (1a - 1c) sofort durchzuführen.

12. Vermittlungsvorrichtung nach einem der vorhergehenden Ansprüche,
**dadurch gekennzeichnet,**
**daß** der bestimmte Belastungsgrad (S₁) unterhalb desjenigen Belastungsgrads liegt, bei dem tatsächlich eine Überbelastung der Vermittlungsprozessoreinrichtung (6a - 6c) auftreten würde, welche zu einer Abweisung von Verbindungsanfragen führt.

## Claims

1. Switching apparatus for setting up the connection between at least two terminals (3a, 3b) which can be connected to the switching apparatus, or between one terminal (3a, 3b) which can be connected to the switching apparatus and an exchange line (3c) which is connected to the switching apparatus,
having at least two switching units (1a - 1c) which are each associated with at least one terminal (3a, 3b) or with at least one exchange line (3c),
with each switching unit (1a - 1c) having a first transmission unit (5a - 5c) for transmitting speech information and at least one of the switching units (1a - 1c) having at least one second transmission unit (4a - 4c) for transmitting terminal-related additional information to at least one other switching unit, and
with each switching unit (1a - 1c) being associated with a switching processor device (6a - 6c) for controlling the switching device,
**characterized**
**in that** monitoring means (7a - 7c) are provided, which are suitable for the purpose of monitoring the load level of the switching processor device (6a - 6c) and, when a specific load level (S₁) of the switching processor device (6a - 6c) is found, of delaying the enabling of the at least one second transmission unit (4a - 4c) of the corresponding switching unit (1a - 1c) for the transmission of the terminal-related additional information.

2. Switching apparatus according to Claim 1,
**characterized**
**in that** each switching unit (1a - 1c) has monitoring means (7a - 7c) for monitoring the load level of the corresponding switching processor device (6a - 6c).

3. Switching apparatus according to Claim 2,
**characterized**
**in that** the monitoring means (7a - 7c) are integrated in the switching processor device (6a - 6c) of the corresponding switching unit (1a - 1c).

4. Switching apparatus according to one of the preceding claims,
**characterized**
**by** a central processor device (8) for controlling the speech and additional information transmission between the switching units (1a - 1c),
with the switching processor devices (6a - 6c) of the individual switching units (1a - 1c) being suitable for signalling to the central processor device (8) the enabling of the second transmission unit (4a - 4c) of the corresponding switching unit (1a - 1c) for the transmission of the terminal-related additional information, and
with the central processor device (8) being suitable for selecting only one of the second transmission units (4a - 4c) which is enabled by a corresponding switching processor device (6a - 6c), for the transmission of the terminal-related additional information.

5. Switching apparatus according to one of the preceding claims,
**characterized**
**in that** the monitoring means (7a - 7c) are suitable for lengthening the delay in the enabling of the second transmission unit (4a - 4c) of a corresponding switching unit (1a - 1c) as the load level of the corresponding switching processor device (6a - 6c) rises.

6. Switching apparatus according to one of the preceding claims,
**characterized**
**in that** each switching unit (1a - 1c) has a number of second transmission units (4a - 4c) for the transmission of the terminal-related additional information, with the monitoring means (7a - 7c) being suitable, after the specific load level of the corresponding switching processor device (6a - 6c) has been found, for delaying the enabling of all the second transmission units (4a - 4c) of the corresponding switching unit (1a - 1c).

7. Switching apparatus according to one of the preceding claims,
**characterized**
**in that** the terminal-related additional information includes the telephone number of a calling terminal (3a, 3b).

8. Switching apparatus according to one of the preceding claims,
**characterized**
**in that** the monitoring means (7a - 7c) include counter means, with the monitoring means being suitable for checking the load level of the switching processor device (6a - 6c) at regular intervals, and for incrementing the counter means when the specific load level (S₁) is exceeded.

9. Switching apparatus according to Claim 8,
**characterized**
**in that** the monitoring means (7a - 7c) are suitable for decrementing the counter means when the switching processor device (6a - 6c) falls below a specific lower load lever (S₂).

10. Switching apparatus according to Claim 8 or 9,
**characterized**
**in that** the monitoring means (7a - 7c) are suitable for lengthening the duration of the delay in the enabling of the at least one second transmission unit (4a - 4c) of a switching unit (1a - 1c) after finding that the specific load level (S₁) of the corresponding switching processor unit (6a - 6c) has been exceeded, with a rising counter state.

11. Switching apparatus according to one of the preceding claims,
**characterized**
**in that** the monitoring means (7a - 7c) are suitable, after finding that a switching processor device (6a - 6c) has exceeded a specific load level (S₁), for immediately carrying out the delay in the enabling of the at least one second transmission unit (4a - 4c) of the corresponding switching unit (1a - 1c).

12. Switching apparatus according to one of the preceding claims,
**characterized**
**in that** the specific load level (S₁) is below that load level at which overloading of the switching processor device (6a - 6c) would actually occur, and which would lead to rejection of connection requests.

## Revendications

1. Central téléphonique pour l'établissement d'une liaison entre au moins deux terminaux (3a, 3b) qui peuvent être raccordés au central téléphonique ou entre un terminal (3a, 3b) qui peut être raccordé au central téléphonique et une ligne de téléphone (3c) reliée au central téléphonique,
avec au moins deux unités de communication (1a - 1c) qui sont associées chacune à au moins un terminal (3a, 3b) ou à au moins une ligne de téléphone (3c), chaque unité de communication (1a - 1c) présentant une première unité de transmission (5a - 5c) pour la transmission d'informations vocales et au moins une deuxième unité de transmission (4a - 4c) associée à au moins l'une des unités de communication (1a - 1c), pour la transmission d'informations supplémentaires concernant les terminaux à au moins une autre unité de communication, un dispositif à processeur de communication (6a - 6c) pour la commande du central téléphonique étant associée à chaque unité de communication (1a - 1c),
**caractérisé en ce que**
des moyens adaptés de surveillance (7a - 7c) sont prévus pour surveiller le taux de charge du dispositif (6a - 6c) à processeur de communication et, en cas de constatation d'un taux de charge (S₁) défini du dispositif (6a - 6c) à processeur de communication, pour retarder la libération d'au moins une seconde unité de transmission (4a - 4c), de l'unité de communication (1a - 1c) correspondante,pour la transmission d'informations supplémentaire concernant les terminaux.

2. Central téléphonique selon la revendication 1, **caractérisé en ce que** chaque unité de communication (1a - 1c) présente des moyens de surveillance (7a - 7c) pour la surveillance du taux de charge du dispositif (6a - 6c) à processeur de communication correspondant.

3. Central téléphonique selon la revendication 2, **caractérisé en ce que** les moyens de surveillance (7a - 7c) sont intégrés dans le dispositif (6a - 6c) à processeur de communication de l'unité de communication (1a - 1c) correspondante.

4. Central téléphonique selon l'une des revendications précédentes, **caractérisé par** un dispositif (8) à processeur central pour la commande de la transmission des informations vocales et des informations supplémentaires entre les unités de communication (1a - 1c), les dispositifs (6a - 6c) à processeur de communication des unités individuelles de communication (1a - 1c) convenant pour indiquer au dispositif (8) à processeur central la libération des deuxièmes unités de transmission (4a - 4c) de l'unité de communication (1a - 1c) correspondante pour la transmission des informations supplémentaires concernant les terminaux, le dispositif (8) à processeur central convenant pour ne sélectionner qu'une seule unité de transmission (4a - 4c) supplémentaire libérée par un dispositif (6a - 6c) à processeur de communication correspondant pour la transmission des informations supplémentaires concernant les terminaux.

5. Central téléphonique selon l'une des revendications précédentes, **caractérisé en ce que** les moyens de surveillance (6a - 6c) conviennent pour prolonger le retard de la libération de la deuxième unité de transmission (4a - 4c) d'une unité de communication (1a - 1c) correspondante lorsque le taux de charge du dispositif (6a - 6c) à processeur de communication correspondant augmente.

6. Central téléphonique selon l'une des revendications précédentes, **caractérisé en ce que** chaque unité de communication (1a - 1c) comprend plusieurs secondes unités de transmission (4a - 4c) pour la transmission des informations supplémentaires concernant les terminaux, les moyens de surveillance (7a - 7c) adaptés retardant, après constatation du taux de charge défini du dispositif (6a - 6c) à processeur de transmission correspondant , la libération de toutes les secondes unités de transmission (4a - 4c)des unités de communication (1a - 1c) correspondantes.

7. Central téléphonique selon l'une des revendications précédentes, **caractérisé en ce que** les informations supplémentaires concernant les terminaux comprennent le numéro d'appel d'un terminal (3a, 3b) qui est situé en appel.

8. Central téléphonique selon l'une des revendications précédentes, **caractérisé en ce que** les moyens de surveillance (7a - 7c) comprennent des moyens à compteur, des moyens de surveillance convenant pour demander à intervalles réguliers le taux de charge du dispositif (6a - 6c) à processeur de communication et à incrémenter les moyens de compteur en cas de dépassement du taux d'occupation (S₁) défini.

9. Central téléphonique selon la revendication 8, **caractérisé en ce que** les moyens de surveillance (7a - 7c) conviennent pour décrémenter les moyens à compteur, au cas où un taux de charge inférieur (S₂) défini du dispositif (6a - 6c) à processeur de communication n'est pas atteint.

10. Central téléphonique selon la revendication 8 ou 9, **caractérisé en ce que** les moyens de surveillance (7a - 7c) conviennent pour prolonger la durée du retard de la libération d'au moins une seconde unité de transmission (4a - 4c), d'une unité de communication (1a - 1c) après constatation d'un dépassement du taux de charge (S₁) défini du dispositif correspondant (6a - 6c) à processeur de communication lorsque l'état du compteur des moyens à compteur augmente.

11. Central téléphonique selon l'une des revendications précédentes, **caractérisé en ce que** les moyens de surveillance (7a - 7c) conviennent pour, après constatation que le taux de charge (S₁) défini d'un dispositif (6a - 6c) à processeur de communication a été dépassé, exécuter immédiatement le retard de la libération d'au moins une seconde unité de transmission (4a - 4c),de l'unité de communication (1a - 1c) correspondante.

12. Central téléphonique selon l'une des revendications précédentes, **caractérisé en ce que** le taux défini de charge (S₁) est situé en dessous du taux de charge pour lequel une surcharge du dispositif (6a - 6c) à processeur de communication, qui entraînerait un refus de demandes de liaison, apparaîtrait effectivement.
